# EUROPÄISCHE PATENTSCHRIFT

(11) **EP 2 289 057 B1**
(45) Veröffentlichungstag und Bekanntmachung des Hinweises auf die Patenterteilung: **21.09.2011**
(21) Anmeldenummer: 09761522.3
(22) Anmeldetag: 15.06.2009
(51) Int. Cl.: G08G 1/0962, G01C 21/36, G08G 1/0969

(54) **VERFAHREN ZUR KOMBINIERTEN AUSGABE EINES BILDES UND EINER FAHRINFORMATION, SOWIE KRAFTFAHRZEUG HIERFÜR**
METHOD FOR COMBINED OUTPUT OF AN IMAGE AND DRIVING INFORMATION AND CORRESPONDING MOTOR VEHICLE
PROCÉDÉ DE SORTIE COMBINÉE D'UNE IMAGE ET D'UNE INFORMATION DE CONDUITE, ET VÉHICULE À MOTEUR ASSOCIÉ

(30) Priorität: 13.06.2008 DE 102008028373
(43) Veröffentlichungstag der Anmeldung: 02.03.2011
(73) Patentinhaber: Audi AG, 85045 Ingolstadt (DE)
(72) Erfinder: RÜB, Gernot, 85049 Ingolstadt (DE); SCHÖNHERR, Kristin, 09496 Marienberg (DE)
(74) Vertreter: Mader, Wilfried
(86) Internationale Anmeldenummer: PCT/EP2009/004297
(87) Internationale Veröffentlichungsnummer: WO 2009/149959

(56) Entgegenhaltungen:
- WO-A-2006/037402
- WO-A-2007/049483
- US-A1- 2005 182 564

## Beschreibung

Die Erfindung betrifft ein Verfahren zur kombinierten Ausgabe eines Bildes einer Bildaufnahmeeinrichtung und wenigstens einer Fahrinformation an einer Anzeigeeinrichtung eines Kraftfahrzeugs, gemäß dem Oberbegriff des Anspruchs 1.

Es ist bekannt, Kameras, Infrarotkameras oder andere Bildaufnahmeeinrichtungen an einem Fahrzeug anzuordnen und die durch diese aufgenommenen Bilder in einer Anzeigeeinrichtung innerhalb des Kraftfahrzeugs anzuzeigen. Die Anzeigeeinrichtungen sind im Armaturenbrett oder in der Mittelkonsole des Kraftfahrzeugs angeordnet, grundsätzlich ist aber jede Positionierung im Blickfeld des Fahrers möglich. Die Bilder der Bildaufnahmeeinrichtungen können in der Anzeigeeinrichtung auch mit weiteren Informationen aus Fahrerassistenzsystemen überlagert dargestellt werden. Bei Bedarf kann beispielsweise die aktuelle Geschwindigkeitsbegrenzung oder auch die aktuelle Fahrgeschwindigkeit den Bildern überlagert werden.

Außerdem ist es bekannt, Fahrhinweise in Form eines Navigationspfeils darzustellen. Um den Fahrer anzuweisen, die aktuelle Fahrrichtung beizubehalten, wird der Navigationspfeil stehend dargestellt, um ein Abbiegen nach Rechts anzuzeigen, wird der Navigationspfeil um 90° im Uhrzeigersinn gedreht. Diese Navigationspfeile können auch den Bildern in der Anzeigeeinrichtung überlagert werden.

Weiterhin ist es bekannt, den Fahrer durch Sprachanweisungen von der Zielführung der Navigationseinrichtung zu informieren. Zur Veranlassung eines Fahrmanövers werden die Sprachanweisungen dabei um einen gewissen Zeitabstand vor den Zeitpunkt zur Einleitung des Fahrmanövers nach vorne verlegt, um dem Fahrer einerseits eine angemessene Reaktionszeit zu gewähren und andererseits einen Bezug zur Fahrsituation herzustellen.

Diese Maßnahmen reichen in den meisten Situationen aus, um eine sichere Zielführung zu gewährleisten. Es gibt allerdings Fahrsituationen, in denen weder die Darstellung der Zielführung als Navigationspfeil noch die Sprachansage eindeutig ist. Als Beispiel seien hier Straßen mit einer Vielzahl an Fahrspuren genannt, wobei nicht klar ist, welcher Spur zu folgen ist. Des Weiteren folgen an Kreisverkehren oft mehrere Abfahrten in kurzen Abständen, so dass auch hier die Zielführung nicht notwendigerweise klar wird. Auch klare Ansagen wie "Bitte verlassen Sie den Kreisverkehr an der dritten Ausfahrt" erfordern ein erhebliches Mitdenken des Fahrers, der gezwungenermaßen die Anzahl der Ausfahrten abzählen muss. Der Fahrer wird daher gerade in kritischen Situationen immer wieder dazu gezwungen, Sprachansagen oder Darstellungen in einer Anzeigeeinrichtung genau zu analysieren und eventuell den Blick lange von der Straße abzuwenden.

Ein Verfahren der eingangs genannten Art ist aus US 2005/0182564 A1 bekannt. Dort wird ein Bild des Fahrzeugsvorfelds mit einer Kamera aufgenommen, in das Fahrinformationen, die basierend auf Informationen einer Navigationseinrichtung und einer weiteren Einrichtung ermittelt werden, positionsgenau eingeblendet werden.

Aus der Druckschrift EP 1 942 314 A1, die Stand der Technik nach Art. 54(3) EPÜ bildet, ist ein Navigationssystem bekannt, bei dem ein Navigationspfeil in ein Kamerabild eingeblendet wird, wobei zur Erfassung der Fahrspur eine Spurerfassungseinrichtung dient.

Der Erfindung liegt damit die Aufgabe zugrunde, ein Verfahren zur kombinierten Ausgabe eines Bildes und einer Fahrinformation anzugeben, durch das die Zielführung einer Navigationseinrichtung oder auch allgemeine Fahranweisungen bzw. -informationen für den Fahrer leicht aufnehmbar dargestellt werden.

Zur Lösung ist erfindungsgemäß ein Verfahren der eingangs genannten Art vorgesehen, mit den Merkmalen des Kennzeichens des Anspruchs 1.

Erfindungsgemäß ist also vorgesehen, dass der Fahrer in einem Echtzeit-Videobild die von ihm zu befahrende Fahrspur, den vorzunehmenden Fahrspurwechsel oder jede beliebige weitere für das Fahrverhalten wichtige Information angezeigt bekommt. Bei mehrspurigen Straßen kann der Fahrer somit leicht erkennen, welche Fahrspur die zweckmäßigste ist.

Selbst bei einspurigen Fahrstrecken ist die Anzeige der zu befahrenden Fahrspur durchaus sinnvoll. Gerade für Fahrer, die öfters Aufenthalte in Ländern mit Linksverkehr haben oder auch Urlauber, die mehrere Wochen in einem Land mit Linksverkehr waren, ist es bei Ankunft in einem Land mit Rechtsverkehr durchaus problematisch, sich an die geänderte Fahrsituation anzupassen. Dies gilt umgekehrt selbstverständlich genauso. Hier kann es gerade auf wenig befahrenen Straßen dazu kommen, dass der Fahrer versehentlich die falsche Fahrspur wählt. Sollte einem derart falsch fahrenden Fahrer hinter einer Kurve ein Fahrzeug entgegenkommen, kann es zu einem vermeidbaren Unfall kommen. Erfindungsgemäß kann dem Fahrer also die "richtige" Fahrspur angezeigt werden. Ein einfacher Navigationspfeil bietet diese Information nicht, da er nicht spurgenau angezeigt wird.

Mit besonderem Vorteil kann als Information der Navigationseinrichtung wenigstens eine Information über die weitere voraussichtliche, in Segmente aufgeteilte, Fahrstrecke aus der Gruppe Länge des Segments, Anzahl der Fahrspuren, Krümmung der Fahrspuren, Fahrtrichtung der Fahrspuren, Zielspur und aktuelle Position verwendet werden. Neben der aktuellen Position liefert eine Navigationseinrichtung auch sogenannte prädikative Streckendaten, die bei der fahrspurgenauen Zuordnung verwendet werden können.

Generell können dabei die Fälle einer aktivierten und einer deaktivierten Zielführung der Navigationseinrichtung unterschieden werden. Ist die Zielführung deaktiviert, wird eine wahrscheinlichste Route von der Navigationseinrichtung berechnet. Selbst bei einspurigen Straßen kann dabei die Anzeige der korrekten Fahrspur hilfreich sein, siehe oben. Bei mehrspurigen Straßen kann dem Fahrer diejenige Spur angezeigt werden, die entlang der Hauptverkehrsrichtung führt. Der Fahrer wird also nicht auf Spuren gelenkt, die ihn im weiteren Verlauf zu einem Abbiegen zwingen würden.

Bei aktivierter Zielführung der Navigationseinrichtung ist jedoch klar, welche Fahrspur aktuell zu wählen ist. Diese kann dem Fahrer angezeigt werden, wodurch vermehrte Fahrspurwechsel vermieden werden und somit die Fahrsicherheit aller Verkehrsteilnehmer erhöht wird.

Mit besonderem Vorteil kann als weitere Einrichtung eine Spurerkennungseinrichtung verwendet werden. Die Spurerkennungseinrichtung kann aus dem Bild der Bildaufnahmeeinrichtung oder einem Bild einer weiteren Bildaufnahmeeinrichtung Spurhypothesen ermitteln, und aus den Spurhypothesen unter Verwendung wenigstens einer Information der Navigationseinrichtung die wahrscheinlichste Fahrspur ermitteln. Die Positionsbestimmung durch eine Navigationseinrichtung ist lediglich auf drei bis zwanzig Meter genau. Diese Information reicht daher alleine nicht immer aus, um dem Fahrer spurgenaue Fahrinformationen anzuzeigen. Durch zusätzliches Verwenden einer Spurerkennungseinrichtung kann die Genauigkeit der Positionsbestimmung prinzipiell bis hin zur Auflösung im Bild der Bildaufnahmeeinrichtung hin gesteigert werden. Dies gelingt allerdings nur, wenn die Spurerkennungseinrichtung sowohl die Anzahl wie auch die Lage der Fahrspuren korrekt erkennt. Um die Zuverlässigkeit der Spurerkennungseinrichtung zu erhöhen, ist es daher sinnvoll, prädikative Streckendaten aus der Navigationseinrichtung hinzuzuziehen. Diese werden dazu verwendet, aus den durch die Spurerkennungseinrichtung aufgestellten Spurhypothesen die wahrscheinlichste zu ermitteln. Dadurch kann eine Positionsbestimmung erreicht werden, die die Positionsbestimmung der Navigationseinrichtung deutlich übertrifft.

Zusätzlich kann als weitere Einrichtung eine 3D-Kamera verwendet werden. Als Information der 3D-Kamera kann wenigstens eine Position und/oder eine Größe und/oder eine Geschwindigkeit eines im 3D-Bild abgebildeten Objekts verwendet werden. Besonders hilfreich ist es beispielsweise zur Positionsbestimmung auf einer mehrspurigen Straße, Objekte auf den seitlichen Fahrspuren zu erkennen. Alternativ ist es auch hilfreich, eine Leitplanke im 3D-Bild extrahieren zu können, sowie deren Abstand zum Kraftfahrzeug. Auch aufgrund dieser Informationen alleine kann die Positionsbestimmung in lateraler Richtung des Kraftfahrzeugs im Vergleich zur Positionsbestimmung mit der Navigationseinrichtung erhöht werden. Aber auch innerorts ist es möglich, durch Erkennung beispielsweise eines Randsteins im 3D-Bild die Positionsbestimmung zu verfeinern.

Alternativ oder zusätzlich kann als weitere Einrichtung ein Lenkwinkelsensor und/oder ein Radwinkelsensor und/oder eine Blinkerbetätigungserfassungseinrichtung und/oder ein Geschwindigkeitssensor und/oder ein Abstandssensor und/oder ein Kompass und/oder eine Verkehrszeichenerkennungseinrichtung des Kraftfahrzeugs verwendet werden. In einer Kurvenfahrt ist beispielsweise der Lenkwinkel bzw. der Radwinkel abhängig von der befahrenen Fahrspur. Somit ist bei Befahren einer Kurve auch eine dieser beiden Informationen ausreichend, um die befahrene Fahrspur zu bestimmen. Ein bevorstehender Fahrspunivechsel kann durch eine Blinkerbetätigungserfassungseinrichtung angezeigt werden. Das Aktivieren des Blinkers wird entweder bei Weiterverfolgen der Fahrtrichtung einen Spurwechsel anzeigen, alternativ kann er auch ein Abbiegen des Kraftfahrzeugs andeuten. Vom Prinzip her ähnlich wie die 3D-Kamera kann auch ein Abstandssensor dazu verwendet werden, Fahrzeuge auf benachbarten Fahrspuren zu detektieren und anhand dieser eine Fahrspurzuordnung vorzunehmen. Selbstverständlich können auch alle vorgehend genannten Informationen zusammen kombiniert werden, um eine möglichst exakte Positionsbestimmung zu erreichen.

Zur Kombination dieser Informationen ist selbstverständlich eine Steuerungseinrichtung mit einer Recheneinrichtung und einer Speichereinrichtung nötig. Um die Kapazität der Recheneinrichtung zu schonen, kann es sinnvoll sein, nach einer einmal vorgenommenen sicheren spurgenauen Positionsbestimmung diese Bestimmung als feststehend anzunehmen, bis eine der genannten Einrichtungen ein Signal aussendet, aufgrund dessen ein möglicher Spurwechsel angenommen werden kann. Beispiele hierfür wären ein Lenkwinkel, der nicht mit dem aufgrund der prädikativen Streckendaten angenommenen Lenkwinkel übereinstimmt bzw. von diesem um mehr als einen gewissen Schwellwert differiert, oder auch eine Betätigung des Blinkers. Bei Vorliegen entsprechender Signale wird also die Steuerungseinrichtung veranlasst, die Positionsbestimmung unter Heranziehung aller möglichen Informationen erneut vorzunehmen. Die Positionsbestimmung kann aber auch ohne Vorliegen bestimmter Aktivierungssignale in kontinuierlichen Zeitabständen vorgenommen werden, um einen von den Fahrerassistenzsystemen unbemerkten Spurwechsel aufzudecken.

Mit besonderem Vorteil kann als Fahrinformation ein Navigationspfeil angezeigt werden. Damit eine fahrspurgenaue Zuordnung erfolgt, wird der Navigationspfeil als auf der Straße liegend dargestellt. Er kann auch einen Schlagschatten erhalten, so dass er über der Straße schwebend erscheint. Damit der Navigationspfeil als auf der Straße liegend aussieht, muss er perspektivisch richtig, d. h. zum vorderen Ende verjüngt, dargestellt werden.

Die Breite des Navigationspfeils sollte 2/3 der Fahrspurbreite nicht überschreiten, so dass der Navigationspfeil auch bei geringfügigen lateralen Fehlerwerten vollständig innerhalb der Markierungen einer einzigen Fahrspur angezeigt wird.

Die Darstellung des Navigationspfeils ist allerdings nicht auf eine Spur beschränkt, sie soll nur spurgenau erfolgen. Beispielsweise ist es bei Ausfahrten sinnvoll, den Navigationspfeil von der vom Fahrzeug befahrenen Fahrspur über eventuell dazwischen liegende Fahrspuren bis hin zur Ausfahrt zu legen, um dem Fahrer eine genaue Fahranweisung bzw. einen konkreten Fahrhinweis zu präsentieren. Dabei soll der Pfeil selbstverständlich von der eigenen Spur exakt auf die Ausfahrt führen, was eine Spurgenauigkeit der Anzeige erfordert. Befindet sich das Kraftfahrzeug beispielsweise auf einer mittleren oder linken Fahrspur einer mehrspurigen deutschen Autobahn, so könnte eine nicht spurgenaue Aufforderung zum Spurwechsel dahingehend missverstanden werden, dass das Auto lediglich auf die rechte Fahrspur zu bewegen ist und nicht auf die Ausfahrt. Derartige Fehlinterpretationen sind erst mit spurgenauen Fahrhinweisen zu vermeiden.

Vorzugsweise kann die Form und/oder die Länge und/oder die Farbe und/oder die Größe und/oder die Transparenz des Navigationspfeils in Abhängigkeit zur Entfernung zu einem Manöverpunkt, an dem das Kraftfahrzeug den eingeschlagenen Fahrweg ändern soll, und/oder in Abhängigkeit der Fahrzeuggeschwindigkeit und/oder der Straßenklasse dargestellt werden. Die Veränderung der genannten Merkmale des Navigationspfeils soll dem Fahrer eine Zusatzinformation bieten, die leicht verständlich ist und für die der Fahrer den Blick nicht länger von der Straße abzuwenden braucht. So kann beispielsweise der Abstand zu einem Manöverpunkt, beispielsweise einer zu verwendenden Ausfahrt auf einer Autobahn, farbkodiert dargestellt werden. In diese Kodierung kann als zusätzliche Information auch eine Information weiterer Sensoreinrichtungen einfließen, beispielsweise eines Geschwindigkeitssensors. Mit den beiden Informationen "Abstand" und "Fahrgeschwindigkeit" wird dann der Navigationspfeil derart farblich kodiert, dass beispielsweise bei einem großen Abstand unabhängig von der Fahrgeschwindigkeit beispielsweise ein Grün- oder Blauton gewählt wird. Mit zunehmender Annäherung an den Manöverpunkt wird der Farbton in einen warnenden oder aggressiven Farbton wie rot oder gelb gewechselt. Denkbar ist es aber auch, den Farbton des Navigationspfeils beständig in einem Grün- oder Blauton zu belassen, solange sich das Kraftfahrzeug mit angepasster Geschwindigkeit auf der durch die Zielführungen bestimmten Fahrroute befindet. Dementsprechend ist es nicht nötig, dem Fahrer Warnhinweise zu geben, solange er einen Wechsel auf die Ausfahrspur noch nicht vornehmen kann. Erst, wenn mittels der Sensoreinrichtungen festgestellt wird, dass sich das Kraftfahrzeug nicht auf die zu benutzende Ausfahrt begibt, soll der Fahrer einen Warnhinweis in Form einer Farbänderung des Navigationspfeils erhalten.

Die Länge des Navigationspfeils kann, insbesondere mit der Fahrzeuggeschwindigkeit oder der Straßenklasse korrigiert werden. Beispielsweise kann die Länge stufenweise verändert werden, abhängig von der aktuellen Fahrgeschwindigkeit. Es ist auch möglich, die Länge des Navigationspfeils durch die Steuerungseinrichtung derart berechnen zu lassen, dass für eine vorgegebene Zeitspanne, beispielsweise 2 Sekunden, die bei der vorliegenden Fahrgeschwindigkeit befahrene Strecke bedeckt wird. Als Zeitspanne könnte dabei auch die durchschnittliche Reaktionszeit eines Fahrers gewählt werden, wodurch der Fahrer in der Anzeigeeinrichtung zu sehen bekäme, ob der Abstand zum Vordermann ausreichend für eventuelle Bremsmanöver ist. Dabei könnte zur Berechnung der Länge des Navigationspfeils als Größe auch die Bremskraft des Kraftfahrzeugs eingehen.

Alternativ kann der Abstand zu einem Manöverpunkt auch dadurch dargestellt werden, dass der Navigationspfeil zumindest teilweise geschlitzt oder eingekerbt wird. Mit Annäherung an einen Manöverpunkt wird vom hinteren Ende des Navigationspfeils beginnend dieser dann schrittweise verkürzt, womit die Annäherung an den Manöverpunkt visualisiert werden kann.

Nähert sich das Kraftfahrzeug an eine Kreuzung, bei der es gemäß der Zielführung der Navigationseinrichtung abbiegen muss, wird der Navigationspfeil sinnvollerweise gemäß dem Fahrtweg gerundet dargestellt. Bei kurzem Abstand zu einem derartigen Manöverpunkt ist die Pfeilspitze dann in der Anzeigeeinrichtung oftmals nicht mehr gut auszumachen. Daher wird gemäß einer ersten erfindungsgemäßen Alternative bei Unterschreiten eines Abstands des Kraftfahrzeugs zu einem Manöverpunkt der Navigationspfeil wenigstens teilweise aufgestellt dargestellt. Dadurch bleibt der Navigationspfeil oft bei ungünstigen Darstellungsverhältnissen optimal sichtbar, so dass eine Verwirrung des Fahrers vermieden werden kann.

Ein weiteres Problem stellen Bodenunebenheiten dar. Normalerweise ist die Kamera parallel zur Bodenfläche, oder sie schließt einen festen Winkel mit ihr ein. Bekannterweise ist die Erdoberfläche allerdings nicht glatt, sondern es gibt auf ihr zahlreiche Erhebungen und Senken. Durch die Bodenunebenheiten kann dann im Bild der Anzeigeeinrichtung der Eindruck entstehen, dass sich der Navigationspfeil in die im Bild dargestellte Bodenebene hineinbohrt oder von ihr abhebt. Um dies zu vermeiden, wird gemäß einer zweiten erfindungsgemäßen Alternative die Darstellung des Navigationspfeils durch wenigstens eine Information einer 3D-Kamera an die in der Anzeigeeinrichtung dargestellte Bodenebene des Bildes der Bildaufnahmeeinrichtung vor dem Kraftfahrzeug angepasst. Dadurch können die oben genannten Darstellungsprobleme vermieden werden und eine Irritation des Fahrers ebenso.

Vorzugsweise kann die Form und/oder die Farbe und/oder die Größe und/oder die Transparenz des Navigationspfeils bei zumindest teilweiser Überlagerung mit einem im Bild der Bildaufnahmeeinrichtung befindlichen Objekt, das keine Fahrbahn oder Fahrspur ist, zumindest teilweise im überlagerten Abschnitt verändert im Vergleich zum nicht überlagerten Abschnitt dargestellt werden. Solche Objekte können andere Kraftfahrzeuge oder auch Häuser sein. Optimalerweise wird die Transparenz des Navigationspfeils genau im vom Objekt überdeckten Bildbereich abgeändert, um das Objekt durch den Navigationspfeil durchscheinen zu lassen. Es ist aber auch denkbar, die Farbe des Navigationspfeils im überschneidenden Bereich zu ändern, um dem Fahrer beispielsweise anzuzeigen, dass sich ein Kraftfahrzeug auf dem von ihm zu befahrenden Weg befindet. Dabei ist dann sinnvollerweise der Warnton rot, während der Rest des Navigationspfeils in der Grundfarbe, beispielsweise grün oder blau, dargestellt wird.

Daneben betrifft die Erfindung auch ein Kraftfahrzeug, umfassend wenigstens eine Bildaufnahmeeinrichtung, eine Navigationseinrichtung, wenigstens eine weitere Einrichtung zur Informationserfassung, eine Steuerungseinrichtung und eine Anzeigeeinrichtung.

Weitere Vorteile, Merkmale und Einzelheiten der Erfindung ergeben sich aus den im folgenden beschriebenen Ausführungsbeispielen sowie anhand der Zeichnungen. Dabei zeigen:
- Fig. 1: eine Prinzipdarstellung eines erfindungsgemäßen Kraftfahr- zeugs,
- Fig. 2: eine Spurhypothesenauswahl einer Spurerfassungseinrichtung ohne Berücksichtigung weiterer Informationen,
- Fig. 3: eine Spurhypothesenauswahl einer Spurerfassungseinrichtung mit Berücksichtigung weiterer Informationen,
- Fig. 4: eine Prinzipdarstellung des Zusammenwirkens verschiedener Einrichtungen eines Kraftfahrzeugs,
- Fig. 5: eine Prinzipdarstellung der Ansicht einer Anzeigeeinrichtung einer ersten Ausführungsform,
- Fig. 6: eine Prinzipdarstellung einer Anzeigeeinrichtung in einer zwei- ten Ausführungsform, und
- Fig. 7: die Prinzipdarstellung einer Anzeigeeinrichtung in einer dritten Ausführungsform.

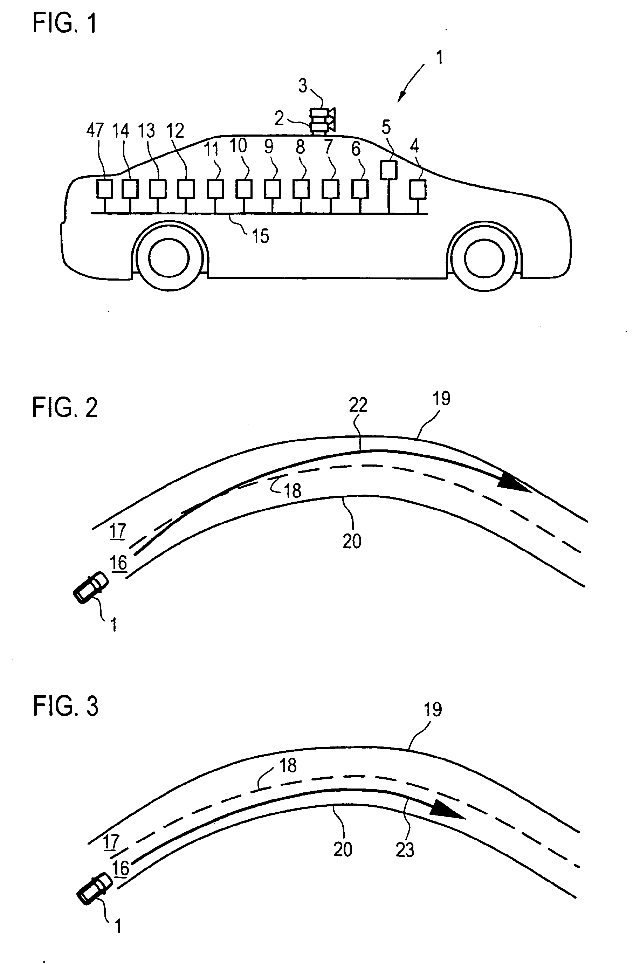

Das erfindungsgemäße Kraftfahrzeug 1 gemäß Fig. 1 weist eine Kamera 2, eine 3D-Kamera 3, eine Steuerungseinrichtung 4 mit Recheneinrichtung und Speichereinrichtung sowie eine Anzeigeeinrichtung 5 auf. Mehrere Fahrerassistenzsysteme, darunter Navigationseinrichtung 6, Spurerfassungseinrichtung 7, Lenkwinkelsensor 8, Radwinkelsensor 9, Blinkerbetätigungserfassungseinrichtung 10, Geschwindigkeitssensor 11, Abstandssensor 12, Gierratensensor 47, Kompass 13 und Verkehrszeichenerkennungseinrichtung 14 sind untereinander und mit der Steuerungseinrichtung 4 über einen gemeinsamen Bus 15 verbunden. Somit können alle Einrichtungen und Sensoren des Kraftfahrzeugs 1 untereinander bzw. über die Steuerungseinrichtung 4 miteinander kommunizieren.

Die Vorteilhaftigkeit der Kombination von Informationen unterschiedlicher Einrichtungen ergibt sich aus den Figuren 2 und 3. Fig. 2 zeigt das erfindungsgemäße Kraftfahrzeug 1 auf einer einspurigen Straße, mit den Fahrspuren 16 und 17. Die Fahrspur 17 wird vom Gegenverkehr befahren, während die Fahrspur 16 vom Kraftfahrzeug 1 befahren wird. Die Straße weist die Spurmarkierungen 18, 19 und 20 auf. Die Spurmarkierung 18 dient dabei zur Trennung der Fahrspuren 16 und 17, während die Spurmarkierungen 19 und 20 den Fahrbahnrand kennzeichnen. Im einfachsten Fall wird die von der Navigationseinrichtung 6 bekannte Fahrroute als Fahrinformation 22 angezeigt bzw. über ein das Fahrzeugvorfeld zeigendes Bild der Anzeigeeinrichtung 5 gelegt. Dadurch ist eine spurgenaue Anzeige von Fahrhinweisen in der Anzeigeeinrichtung 5 nicht möglich.

Abhilfe schafft hier die Verwendung von Informationen weiterer Einrichtungen des Kraftfahrzeugs 1, wie in Fig. 3 dargestellt ist. Beispielsweise ermittelt die Spurerfassungseinrichtung 7 aus den Bildern 21 Spurhypothesen, die wiederum durch Verwendung prädikativer Streckendaten der Navigationseinrichtung 6 ausgewertet und verbessert werden. Die prädikativen Streckendaten enthalten Angaben für die vor dem Fahrzeug liegende und in Segmente aufgeteilte Fahrstrecke in Form der Länge des Segments, der Krümmungen, insbesondere der Anfangs- und Endkrümmung, der Anzahl der Fahrspuren, der Richtung, ob also eine Einbahnstraße oder eine Straße mit Gegenverkehr vorliegt, sowie bei aktivierter Zielführung der Navigationseinrichtung die Zielspur und ansonsten die wahrscheinlichste Route. Die Positionsbestimmung mittels der Navigationseinrichtung 6 ist lediglich auf 3 bis 20 Meter genau, was eine spurgenaue Positionsbestimmung des Fahrzeugs verhindert. Auch die Spurerfassungseinrichtung alleine kann nicht immer die spurgenaue Positionierung ermitteln. Durch die erfindungsgemäße Kombination der Informationen der Navigationseinrichtung 6 mit den Spurhypothesen der Spurerfassungseinrichtung 7 gelingt aber die Generierung besserer, angepasster Spurhypothesen 23. Dadurch wird eine sehr genaue Lokalisierung des Fahrzeugs möglich und dadurch eine spurgenaue Platzierung von Fahrhinweisen innerhalb der Bildschirmanzeige. Bei hohem Verkehrsaufkommen können auch aus dem oder den Bild(ern) der 3D-Kamera 3 Spurinformationen gewonnen werden, indem eine Spurbelegung ermittelt und an die Spurerfassungseinrichtung übermittelt wird.

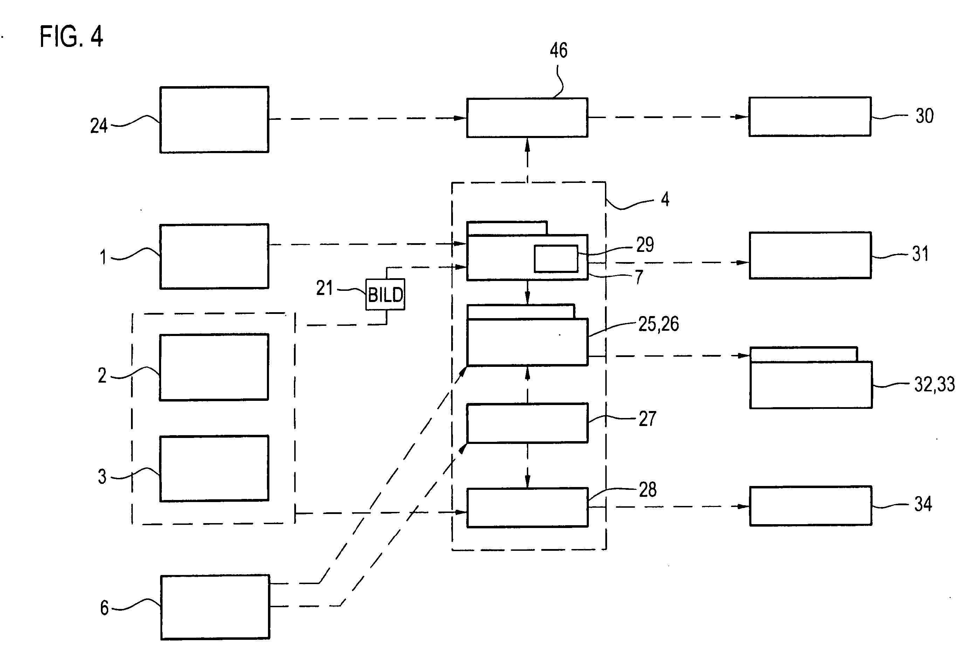

Fig. 4 zeigt ein Übersichtsschema des Zusammenwirkens verschiedener Einrichtungen und Informationen im Kraftfahrzeug 1. Neben der bereits genannten Kamera 2, 3D-Kamera 3 und Navigationseinrichtung 6 kann auch eine Nachtsichtkamera 24 vorgesehen sein, um das erfindungsgemäße Verfahren auch nachts durchführen zu können. Die Einrichtungen des Kraftfahrzeugs 1 müssen selbstverständlich entsprechende Schnittstellen aufweisen, so dass sie über die Steuerungseinrichtung 4 bzw. die Nachtsichtsteuerungseinrichtung 46 angesprochen werden können. Das Bild oder die Bilder 21 der Kamera 2 werden an die Spurerfassungseinrichtung 7 übergeben, die von dieser zur Generierung von Spurhypothesen ausgewertet werden. Dies kann direkt oder indirekt über die Steuerungseinrichtung 4 geschehen. Die Steuerungseinrichtung 4 sieht weiterhin eine Ausfahrtserkennungseinrichtung 25, eine Kreuzungserkennungseinrichtung 26, eine Positionsbestimmungseinrichtung 27 sowie eine POI-Erkennung 28 vor. POI bezeichnet dabei "points of interest", womit für den Fahrer interessante Lokalitäten wie etwa Tankstellen, Parkplätze, Museen, Krankenhäuser etc. gemeint sind. Die Einrichtungen 25 - 28 werten dabei Daten der Navigationseinrichtung 6 aus. Die Spurhypothesenerzeugungseinrichtung 29 der Spurerfassungseinrichtung 7 ermittelt aus den Bildern 21 Spurhypothesen, woraus die Spurerfassungseinrichtung 7 unter Berücksichtigung der Informationen der Einrichtungen 25 - 28 die wahrscheinlichste Spurhypothese auswählt. Durch die Kombination der Fahrzeugeinrichtungen wird es möglich, eine Vielzahl an Benutzerbedürfnissen zu befriedigen. Durch die Nachtsichtkamera 24, insbesondere als Infrarotkamera ausgebildet, kann die Informationseinrichtung Nachtfähigkeit 30 erlangen. Durch die Kombination der Informationen der Navigationseinrichtung 6 mit den Informationen aus den Bildern 21 der Kamera 2 kann die Spurerfassungseinrichtung 7 eine exakte Spurkennzeichnung 31 bewerkstelligen. Mit diesen Informationen gelingt auch eine spurgenaue Ausfahrtskennzeichnung 32 sowie eine spurgenaue Kreuzungskennzeichnung 33. Auch die POI-Kennzeichnung gelingt in der gleichen Genauigkeit.

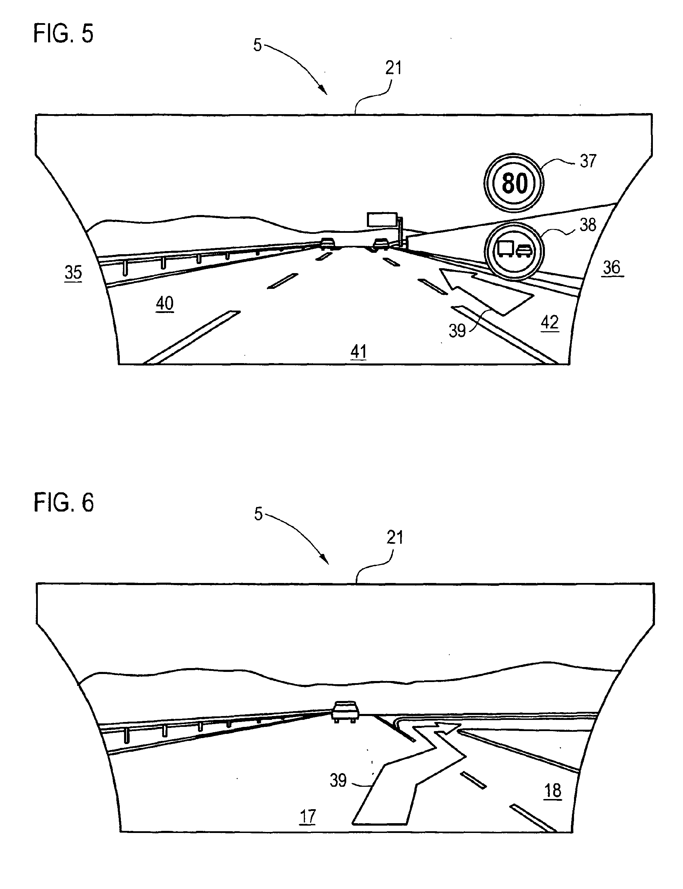

Die spurgenaue Darstellung von Fahrinformationen ist in Fig. 5 dargestellt. Das Bild 21 der Kamera 2 wird in der Anzeigeeinrichtung 5, die sich im Armaturenbrett zwischen der Drehzahlanzeige 35 und dem Tachometer 36 befindet, überlagert. Dies können allgemeine Informationen wie eine Geschwindigkeitsbegrenzung oder ein Lastkraftwagenüberholverbot in Form der Symbole 37 und 38 sein, andererseits lassen sich durch das erfindungsgemäße Verfahren eben auch spurgenaue Informationen in Form des Navigationspfeils 39 darstellen. Zu sehen sind in Fig. 5 im Wesentlichen die Fahrspuren 40, 41 und 42 einer dreispurigen Autobahn. Aufgrund der Informationen aus der 3D-Kamera 3 ist der Steuerungseinrichtung 4 bekannt, dass die Fahrspuren 40, 41 und 42 in einem großen Abstand vor dem Kraftfahrzeug 1 frei sind. Diese Information kann durch Angaben des Abstandssensors 12 gegebenenfalls ergänzt werden. Im Falle einer deutschen Autobahn ist es daher angebracht, dass das Kraftfahrzeug 1 die rechte Fahrspur 42 befährt. Dementsprechend ist der Navigationspfeil auf dieser Fahrspur angeordnet. Das heißt, dass der Navigationspfeil 39 nicht einfach nur vor dem Kraftfahrzeug 1 dargestellt wird, sondern dass er eben spurgenau Informationen gibt. Sollte der Abstandssensor 12 allerdings Kraftfahrzeuge auf der Fahrspur 42 ausmachen, die langsamer als das eigene Kraftfahrzeug 1 sind, wird der Navigationspfeil sinnvollerweise auf Fahrspur 41 gelegt.

Zur perspektivisch richtigen Darstellung ist der Navigationspfeil 39 zum vorderen Bereich hin verjüngt, um einen auf der Fahrspur 42 liegenden Eindruck darzustellen. Der Navigationspfeil kann auch mit einem Schlagschatten unterlegt werden, um einen leicht schwebenden Eindruck zu erzeugen. Seine Breite sollte 2/3 der Fahrspurbreite nicht übertreffen, damit auch bei geringen Fehlern in der Positionsbestimmung der Navigationspfeil 39 vollständig innerhalb einer einzigen Fahrspur liegend dargestellt wird. Andernfalls könnte die Darstellung Irritationen beim Fahrer hervorrufen.

Die Bilder der 3D-Kamera können weitergehend dahin ausgewertet werden, dass die Bodenebene vor dem Kraftfahrzeug bzw. ihre Krümmung erfasst wird. Hierzu wird jedem Bildpunkt eines Bildes der 3D-Kamera ein absoluter Abstandswert zugeordnet, woraus die Krümmung der Bodenebene berechnet werden kann. Mit diesen Informationen kann die Darstellung des Navigationspfeils 39 angepasst werden, da seine Darstellung sich ansonsten bei ungünstigen Verhältnissen in die im Bild 21 dargestellte Bodenebene hineinbohren oder von ihr abheben würde. Auch dies könnte zu Irritationen beim Fahrer führen.

Die in Fig. 5 gezeigte kombinierte Ausgabe hängt nicht von einer Aktivierung der Zielführung der Navigationseinrichtung 6 ab. Vielmehr gibt es zumeist auch ohne aktivierte Zielführung eine wahrscheinlichste Route. Diese kann dementsprechend in der Anzeigeeinrichtung 5 dem Bild 21 überlagert dargestellt werden.

Ist die Zielführung der Navigationseinrichtung 6 aber aktiviert, kann der Steuerungseinrichtung 4 als Information auch eine Zielspur übergeben werden. In diesem Fall sind auch Manöverpunkte im Voraus bekannt. Ein Annähern des Kraftfahrzeugs 1 an einen solchen Manöverpunkt kann dann mit weiteren Informationen dargestellt werden. Insbesondere ist es denkbar, dass das hintere Ende des Navigationspfeils 39 geschlitzt dargestellt wird und entsprechend der Entfernung zum Manöverpunkt jeweils Stücke wegfallen, so dass der Fahrer eine adäquate Information über den Abstand zum Manöverpunkt erhält. Alternativ oder zusätzlich kann auch die Farbe des Navigationspfeils 39 verändert werden. Die Farbe kann dabei kontinuierlich oder in diskreten Schritten geändert werden. Bis zu einem Abstand von 500 m zum nächsten Manöverpunkt wird beispielsweise die Farbe blau ausgewählt, danach wechselt die Farbe auf grün, während sie ab einer Entfernung von unter 150 m zum Manöverpunkt in rot dargestellt wird. Hierdurch kann ohne die Ausgabe von Zahlen an der Anzeigeeinrichtung 5 dem Fahrer ein Abstandswert vermittelt werden.

Die Länge des Navigationspfeils 39 kann zwar grundsätzlich straßenklassenabhängig gewählt werden, allerdings bietet sich insbesondere eine geschwindigkeitsabhängige Darstellung an. Aus den Informationen des Geschwindigkeitssensors 11 wird beispielsweise ein möglicher Mindestbremsweg berechnet, der die Länge des Navigationspfeils 39 bestimmt. Hierdurch kann dem Fahrer in der Anzeigeeinrichtung 5 ein Mindestabstand zu einem vorausfahrenden Kraftfahrzeug verdeutlicht werden.

Fig. 6 zeigt die Darstellung eines Fahrhinweises in kurzer Entfernung zu einem Manöverpunkt. Die Fahrinformation wechselt dabei von der momentan befahrenen Fahrspur gemäß der Zielführung der Navigationseinrichtung 6 auf die in Kürze zu befahrende Zielspur, um dem Fahrer den Fahrweg konkret und spurgenau anzuzeigen.

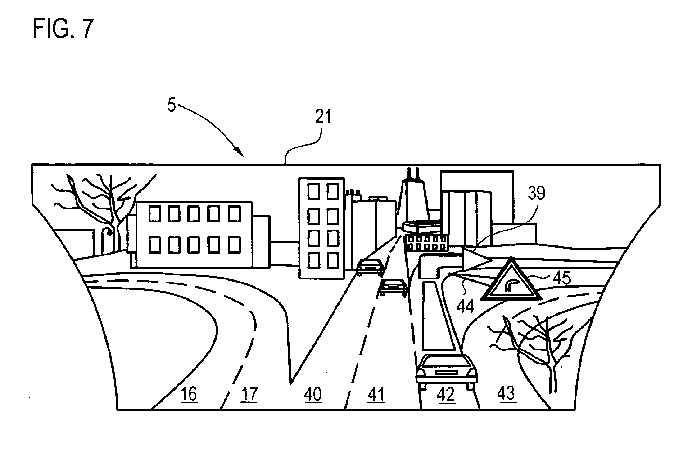

Zusätzlich zu einem Navigationspfeil 39 kann dem Fahrer auch eine Lokalinformation in Form einer ortsgenauen Informationsanzeige dargestellt werden, wie in Fig. 7 zu sehen ist. Hier wird ein eine Information anzeigendes Symbol 45 durch eine Positionsanzeige in Form einer Nadel 44 einem Ort im Bild 21 zugeordnet. Dadurch kann der Fahrer auf einen vor ihm befindlichen potentiell gefährlichen Streckenabschnitt hingewiesen werden. Der Navigationspfeil 39 ist teilweise aufgerichtet dargestellt, da er bei der vorliegenden Perspektive ansonsten schlecht wahrnehmbar ist. Die Fahrspur 42 wird dem Fahrer frühzeitig angezeigt, um unnötige Fahrspurwechsel beispielsweise von den Spuren 41 oder 43 zu vermeiden. Hierdurch kann die Sicherheit aller Verkehrsteilnehmer erhöht werden.

## Patentansprüche

1. Verfahren zur kombinierten Ausgabe eines Bildes einer Bildaufnahmeeinrichtung (2) und wenigstens einer Fahrinformation (37, 38, 39) an einer Ahzeigeeinrichtung (5) eines Kraftfahrzeugs (1), wobei die wenigstens eine Fahrinformation durch Kombination von Informationen einer Navigationseinrichtung (6) und wenigstens einer weiteren Einrichtung derart dem Bild überlagert wird, dass eine fahrspurgenaue Zuordnung der wenigstens einen Fahrinformation zu weinigstens einer von mehreren im Bild gezeigten Fahrspurer (40, 41, 42) der Fahrstrecke erfolgt,
**dadurch gekennzeichnet,**
**dass** als Fahrinformation ein Navigationspfeil (39) angezeigt wird, wobei bei Unterschreiten eines Abstands des Kraftfahrzeugs zu einem Manöverpunkt der Navigationspfeil wenigstens teilweise aufgestellt dargestellt wird, und/oder die Darstellung des Navigationspfeils durch wenigstens eine Information einer 3D-Kamera (3) an die in der Anzeigeeinrichtung dargestellte Bodenebene des Bildes der Bildaufnahmeeinrichtung vor dem Kraftfahrzeug angepasst wird.

2. Verfahren nach Anspruch 1,
**dadurch gekennzeichnet,**
**dass** als Information der Navigationseinrichtung wenigstens eine Information über die weitere voraussichtliche, in Segmente aufgeteilte, Fahrstrecke aus der Gruppe Länge des Segments, Anzahl der Fahrspuren, Krümmung der Fahrspuren, Fahrtrichtung der Fahrspuren, Zielspur und aktuelle Position verwendet wird.

3. Verfahren nach einem der vorangehenden Ansprüche,
**dadurch gekennzeichnet,**
**dass** als weitere Einrichtung eine Spurerkennungseinrichtung (7) verwendet wird.

4. Verfahren nach Anspruch 3,
**dadurch gekennzeichnet,**
**dass** die Spurerkennungseinrichtung aus dem Bild der Bildaufnahmeeinrichtung oder einem Bild einer weiteren Bildaufnahmeeinrichtung Spurhypothesen ermittelt, und dass aus den Spurhypothesen unter Verwendung wenigstens einer Information der Navigationseinrichtung die wahrscheinlichste Fahrspur ermittelt wird.

5. Verfahren nach einem der vorangehenden Ansprüche,
**dadurch gekennzeichnet,**
**dass** als Information der 3D-Kamera wenigstens eine Position und/oder eine Größe und/oder eine Geschwindigkeit eines im 3D-Bild abgebildeten Objekts verwendet wird.

6. Verfahren nach einem der vorangehenden Ansprüche,
**dadurch gekennzeichnet,**
**dass** als weitere Einrichtung ein Lenkwinkelsensor (8) und/oder ein Radwinkelsensor (9) und/oder eine Blinkerbetätigungserfassungseinrichtung (10) und/oder ein Geschwindigkeitssensor (11) und/oder ein Abstandssensor (12) und/oder ein Kompass (13) und/oder eine Verkehrszeichenerkennungseinrichtung (14) und/oder ein Gierratensensor (47) des Kraftfahrzeugs verwendet wird.

7. Verfahren nach einem der vorangehenden Ansprüche,
**dadurch gekennzeichnet,**
**dass** die Form und/oder die Länge und/oder die Farbe und/oder die Größe und/oder die Transparenz des Navigationspfeils in Abhängigkeit zur Entfernung zu einem Manöverpunkt, an dem das Kraftfahrzeug den eingeschlagenen Fahrweg ändern soll, und/oder in Abhängigkeit der Fahrzeuggeschwindigkeit und/oder der Straßenklasse dargestellt wird.

8. Verfahren nach einem der vorangehenden Ansprüche,
**dadurch gekennzeichnet,**
**dass** die Form und/oder die Farbe und/oder die Größe und/oder die Transparenz des Navigationspfeils bei zumindest teilweiser Überlagerung mit einem im Bild der Bildaufnahmeeinrichtung befindlichen Objekt, das keine Fahrbahn oder Fahrspur ist, zumindest teilweise im überlagerten Abschnitt verändert im Vergleich zum nicht überlagerten Abschnitt dargestellt wird.

9. Kraftfahrzeug (1), umfassend wenigstens eine Bildaufnahmeeinrichtung (2), eine Navigationseinrichtung (6), wenigstens eine weitere Einrichtung zur Informationserfassung, eine Steuerungseinrichtung (4) und eine Anzeigeeinrichtung (5) zur Durchführung des Verfahrens nach einem der Ansprüche 1 bis 8.

## Claims

1. A method for combined outputting of an image from an image-recording device (2) and at least one piece of driving information (37, 38, 39) on a display device (5) of a motor vehicle (1), wherein the at least one piece of driving information is superimposed on the image by combining pieces of information from a navigation device (6) and from at least one further device, in such a way that the at least one piece of driving information is assigned, with accuracy to the level of a lane, to at least one of the plurality of lanes (40, 41, 42) of the route which is shown in the image, **characterized**
**in that** a navigation arrow (39) is displayed as driving information, wherein, when a distance of the motor vehicle from a manoeuvring point is undershot, the navigation arrow is represented in an at least partially upright position, and/or the representation of the navigation arrow is adapted, by at least one piece of information of a 3-D camera (3), to the ground level in front of the motor vehicle in the image of the image-recording device which is represented in the display device.

2. Method according to Claim 1,
**characterized**
**in that** navigation device information which is used comprises at least one piece of information about the further anticipated route, divided into segments, said information being from the group: length of the segment, number of the lanes, curvature of the lanes, direction of travel of the lanes, target lane and current position.

3. Method according to one of the preceding claims,
**characterized**
**in that** a lane-detection device (7) is used as a further device.

4. Method according to Claim 3,
**characterized**
**in that** the lane-detection device determines lane hypotheses from the image of the image-recording device or from an image of a further image-recording device, and in that the most probable lane is determined from the lane hypotheses using at least one piece of information of the navigation device.

5. Method according to one of the preceding claims,
**characterized**
**in that** at least one position and/or one variable and/or one speed of an object which is imaged in the 3-D image is used as information of the 3-D camera.

6. Method according to one of the preceding claims,
**characterized**
**in that** a steering angle sensor (8) and/or a wheel angle sensor (9) and/or a flashing indicator light activation-detection device (10) and/or a speed sensor (11) and/or an inter-vehicle distance sensor (12) and/or a compass (13) and/or a road sign-detection device (14) and/or a yaw rate sensor (47) of the motor vehicle are/is used as a further device.

7. Method according to one of the preceding claims,
**characterized**
**in that** the shape and/or the length and/or the colour and/or the size and/or the transparency of the navigation arrow is represented as a function of the distance from a manoeuvring point at which the motor vehicle is to change the adopted route and/or as a function of the vehicle speed and/or the road class.

8. Method according to one of the preceding claims,
**characterized**
**in that** the shape and/or the colour and/or the size and/or the transparency of the navigation arrow in the case of at least partial superimposition with an object which is located in the image of the image-recording device and which is not a carriageway or a lane, is represented at least partially modified in the superimposed section compared to the non-superimposed section.

9. Motor vehicle (1), comprising at least one image-recording device (2), one navigation device (6), at least one further device for acquiring information, one control device (4) and one display device (5) for carrying out the method as claimed in one of Claims 1 to 8.

## Revendications

1. Procédé de délivrance combinée d'une image d'un dispositif d'acquisition d'image (2) et d'au moins une information de conduite (37, 38, 39) sur un dispositif d'affichage (5) d'un véhicule automobile (1), l'au moins une information de conduite étant superposée à l'image par combinaison des informations d'un dispositif de navigation (6) et d'au moins un dispositif supplémentaire de telle sorte qu'il se produit une association précise à la voie de l'au moins une information avec au moins une parmi plusieurs voies de circulation (40, 41, 42) du trajet représenté dans l'image,
**caractérisé en ce que** l'information de conduite affichée est une flèche de navigation (39), la flèche de navigation étant représentée au moins partiellement dressée et/ou la représentation de la flèche de navigation étant adaptée par au moins une information d'une caméra 3D (3) au plan de sol représenté dans le dispositif d'affichage de l'image du dispositif d'acquisition d'image devant le véhicule automobile dans le cas où l'écart entre le véhicule automobile et un point de manoeuvre devient inférieur à un écart donné.

2. Procédé selon la revendication 1, **caractérisé en ce que** l'information utilisée du dispositif de navigation est au moins une information sur la suite probable du trajet, divisé en segments, parmi le groupe incluant la longueur du segment, le nombre de voies de circulation, la courbure des voies de circulation, le sens de circulation des voies de circulation, la voie destinataire et la position actuelle.

3. Procédé selon l'une des revendications précédentes, **caractérisé en ce que** le dispositif supplémentaire utilisé est un dispositif de détection de voie (7).

4. Procédé selon la revendication 3, **caractérisé en ce que** le dispositif de détection de voie détermine des hypothèses de voie à partir de l'image du dispositif d'acquisition d'image ou d'une image d'un dispositif d'acquisition d'image supplémentaire et **en ce que** la voie de circulation la plus probable est déterminée à partir des hypothèses de voie en utilisant au moins une information du dispositif de navigation.

5. Procédé selon l'une des revendications précédentes, **caractérisé en ce que** l'information de la caméra 3D utilisée est au moins une position et/ou une taille et/ou une vitesse d'un objet représenté dans l'image 3D.

6. Procédé selon l'une des revendications précédentes, **caractérisé en ce que** le dispositif supplémentaire utilisé est un détecteur d'angle de direction (8) et/ou un détecteur d'angle de roue (9) et/ou un détecteur d'actionnement du clignotant (10) et/ou un détecteur de vitesse (11) et/ou un détecteur de distance (12) et/ou une boussole (13) et/ou un dispositif de détection de panneau de circulation (14) et/ou un détecteur de taux de lacet (47) du véhicule automobile.

7. Procédé selon l'une des revendications précédentes, **caractérisé en ce que** la forme et/ou la longueur et/ou la couleur et/ou la taille et/ou la transparence de la flèche de navigation sont représentées en fonction de la distance d'un point de manoeuvre auquel le véhicule automobile doit modifier le trajet en cours et/ou en fonction de la vitesse du véhicule et/ou de la catégorie de route.

8. Procédé selon l'une des revendications précédentes, **caractérisé en ce que** la forme et/ou la couleur et/ou la taille et/ou la transparence de la flèche de navigation, dans le cas d'une superposition au moins partielle avec un objet qui se trouve dans l'image du dispositif d'acquisition d'image et qui n'est ni une chaussée ni une voie de circulation, sont représentées en étant modifiées au moins partiellement dans la section superposée par rapport à la section non superposée.

9. Véhicule automobile (1) comprenant au moins un dispositif d'acquisition d'image (2), un dispositif de navigation (6), au moins un dispositif supplémentaire d'acquisition d'informations, un dispositif de commande (4) et un dispositif d'affichage (5) pour mettre en oeuvre le procédé selon l'une des revendications 1 à 8.
